# EUROPEAN PATENT APPLICATION

(11) **EP 1 481 783 A2**
(43) Date of publication of application: **01.12.2004**
(21) Application number: 03015896.8
(22) Date of filing: 11.07.2003
(51) Int. Cl.: B29B 9/12, B29B 9/16, B29C 45/00

(54) **Method for producing an injection-molded material with an antibacterial function**

(30) Priority: 31.05.2003 KR 2003035032
(71) Applicant: Daewoo Electronics Corporation, Seoul (KR)
(72) Inventor: Jin, Soo Kim, Daewoo Electronics Corporation, Seoul (KR)
(74) Representative: Turi, Michael, Dipl.-Phys.

(57) **Abstract**

A method for producing an injection-molded material with an antibacterial function includes the steps of coating nanosilver particles and pigment onto surfaces of plastic raw materials to make pellets of the mixture; and inserting the mixture pellets into an injection molding machine to form an injection-molded material. A cohesive agent may be mixed with a solution of the nanosilver particles and the pigment prior to the step of coating the nanosilver particles and the pigment onto the surfaces of the plastic raw materials. The step of coating the nanosilver particles and the pigment onto the surfaces of the plastic raw material includes spraying the nanosilver particles and the pigment onto the surfaces of the plastic raw materials or immersing the plastic raw material into a solution of the nanosilver particles and the pigment.

## Description

The present invention relates to a method for producing an injection-molded material with an antibacterial function; and, more particularly, to an injection molding method capable of preventing a discoloration and/or a decrease in strength of the injection-molded material.

In general, silver (Ag) is well-known as a common antibacterial agent. In particular, colloidal silver is known as being safe and effective against bacteria, fungi, microbes, virus and the like. When silver ions are absorbed into cells of virus, bacteria, fungi and the like, the silver ions prevent the operation of enzyme required in respiration thereof to render them dead. Further, silver ions prevent metabolism of the bacteria and suppress reproduction thereof.

Fine particles of silver can be produced by a physical process such as electrolysis, liquid phase reduction, and grinding. The electrolysis has mainly been used hitherto in order to obtain stabilized nanosilver particles with a high purity. In the electrolysis process, pure silver (99.99%) is immersed into distilled water; and extremely fine particulates of silver are obtained by applying a low current at a low temperature.

Meanwhile, a refrigerator serves to preserve food in a fresh state for an extended period of time in a food storage compartment by cooling air in the compartment using a refrigeration cycle. In the refrigerator, refrigerant gas compressed under a high temperature and a high pressure by a compressor is condensed into liquid phase in a condenser; and the liquid is then pressure-reduced through an expansion valve and evaporated in an evaporator. At this time, the evaporating refrigerant takes heat from the ambient air to cool it. The cooled air is then forced into the food storage compartment by, e.g., a fan.

A study on employing the nanosilver particles in the refrigerator has been conducted so as to provide the refrigerator with an antibacterial function. In other words, by incorporating nanosilver particles into a finished material constituting any part of the refrigerator where there may be a generation and growth of bacteria, such as an interior finished material constituting a food storage compartment of the refrigerator, a storage vessel, a pocket and a part constituting an air circulation duct, the finished material comes with the antibacterial function.

In a conventional process for molding a finish material with an antibacterial function, raw materials (master batches) of nanosilver particles and pigment are mixed with a transparent plastic resin, e.g., GPPS. The mixture is heated and melted at a temperature of 220~250°C and then cooled into a solid state. The solid mixture is cut to form pellets of a fine particle size. The pellets are inserted into an injection molding machine and injected in a molten state at a temperature of 180~250°C to form a finish material.

In such a conventional process, however, there are certain problems as follows:
1. The unstable nanosilver particles are thermally deformed to cause discoloration of the mixture while the transparent plastic resin, the nanosilver particles and the pigment are undergone the mixing procedure and the final injection procedure.
2. There is a great difficulty in keeping the temperature at the same condition upon the mixing procedure and the injection procedure for every molding lots. Therefore, due to such variability in temperature condition, there may occur an inconsistency in color of the injection-molded materials at every lots.
3. During the mixing and the injecting procedures, since the molecular bonding structures as well as the color compositions are varied, the strength is deteriorated and the brittleness is increased so that it is likely to be caused a failure due to a shock.

It is, therefore, a primary object of the present invention to provide an improved method for producing an injection-molded material with an antibacterial function wherein a desired color of a finish material is stably obtained without the above-mentioned problems.

In accordance with an aspect of the present invention, there is provided a method for producing an injection-molded material with an antibacterial function including the steps of: coating nanosilver particles and pigment onto surfaces of plastic raw materials to make pellets of the mixture; and inserting the mixture pellets into an injection molding machine to form an injection-molded material.

Preferably, a cohesive agent may be mixed with a solution of the nanosilver particles and the pigment prior to the step of coating the nanosilver particles and the pigment onto the surfaces of the plastic raw materials.

The step of coating the nanosilver particles and the pigment onto the surfaces of the plastic raw material includes spraying the nanosilver particles and the pigment onto the surfaces of the plastic raw materials or immersing the plastic raw material into a solution of the nanosilver particles and the pigment.

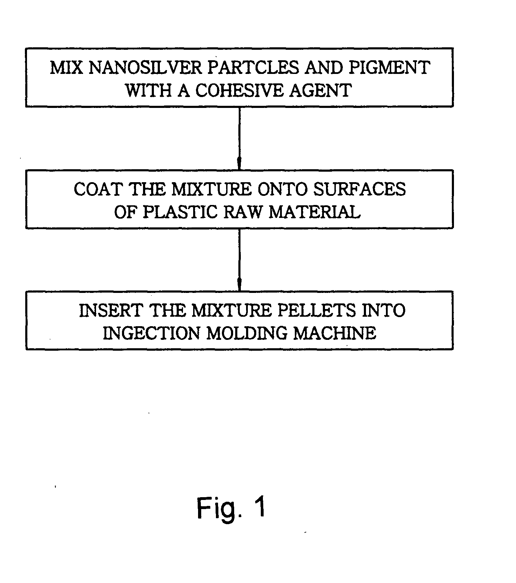

The above and other objects and features of the present invention will become apparent from the following description of preferred embodiments given in conjunction with the accompanying drawing in which:

The drawing is a flowchart showing a process for forming an injection-molded material in accordance with a preferred embodiment of the present invention.

A preferred embodiment of the present invention will now be described in detail with reference to the accompanying drawing.

The drawing is a flowchart showing the steps of a process for producing an injection-molded material in accordance with the present invention.

The inventor has found that, in the conventional injection molding process as described above, the causes of discoloration of the injection-molded material are the heat (e.g., 220~250°C) applied during the procedure in which a transparent plastic resin, nanosilver particles and pigment are mixed and melted, and the heat (e.g., 180~250°C) applied to the pellets of the mixture at the final injection molding procedure. As a result of a test, it has also been found that during the mixing and heating procedure of the transparent plastic resin, the nanosilver particles and the pigment, particularly due to the thermal-deformation which takes place therein, the nanosilver particles become unstable to cause the discoloration of the mixture.

In other words, it has been found that, in the conventional injection molding process, there are two heat-treatment procedures by which the compositions of the mixture determining the color thereof can be affected. The inventor has developed an improved injection molding method by reducing the number of the heat-treatment procedure.

In the method of producing a finished material containing nanosilver particles in accordance with the present invention, nanosilver particles and pigment are coated onto surfaces of raw materials of, e.g., a transparent plastic resin to form pellets of the mixture with the nanosilver particles and the pigment coated on the surfaces of the plastic raw materials. The mixture pellets are then inserted in an injection molding machine and injected in a molten state to form a finished material.

Prior to the step of coating the nanosilver particles and the pigment onto the surfaces of the plastic raw material, a cohesive agent may be added to the nanosilver solution (colloidal silver) and the pigment in order to enhance the cohesion of the nanosilver particles and the pigment to the plastic raw material. In this way, a more stabilized mixture can be obtained.

The method of the present invention employs the step of coating the nanosilver particles and the pigment onto the surfaces of the plastic raw materials instead of the conventional step of mixing and heating the transparent plastic resin, the nanosilver particles and the pigment, thereby eliminating the heat-treatment procedure.

According to the injection molding method of the present invention, one heat-treatment step is removed compared with the prior art method; and, therefore, a test result does not show a discoloration, a decrease in strength and an increase in brittleness of the injection-molded material produced by the injection molding process of the present invention.

In the injection molding method in accordance with the preferred embodiment of the present invention, the step of coating the nanosilver particles and the pigment onto the surfaces of the plastic raw materials includes spraying the mixture of the nanosilver particles and the pigment onto the surfaces of the plastic raw material or immersing the plastic raw materials into the solution of the nanosilver particles and the pigment, but not limited thereto.

While the invention has been shown and described with respect to the preferred embodiments, it will be understood by those skilled in the art that various changes and modifications may be made without departing from the scope of the invention as defined in the following claims.

## Claims

1. A method for producing an injection-molded material with an antibacterial function comprising the steps of:
coating nanosilver particles and pigment onto surfaces of plastic raw materials to make pellets of the mixture; and
inserting the mixture pellets into an injection molding machine to form an injection-molded material.

2. The method of claim 1, further comprising the step of mixing a cohesive agent with a solution of the nanosilver particles and the pigment prior to said step of coating the nanosilver particles and the pigment onto the surfaces of the plastic raw materials.

3. The refrigerator of claim 1 or 2, wherein said step of coating the nanosilver particles and the pigment onto the surfaces of the plastic raw material includes spraying the nanosilver particles and the pigment onto the surfaces of the plastic raw materials.

4. The refrigerator of claim 1 or 2, wherein said step of coating the nanosilver particles and the pigment onto the surfaces of the plastic raw material includes immersing the plastic raw material into a solution of the nanosilver particles and the pigment.
